# EUROPÄISCHE PATENTSCHRIFT

(11) **EP 1 426 019 B1**
(45) Veröffentlichungstag und Bekanntmachung des Hinweises auf die Patenterteilung: **16.12.2009**
(21) Anmeldenummer: 03023686.3
(22) Anmeldetag: 17.10.2003
(51) Int. Cl.: A61C 13/20

(54) **Muffelsystem für Dentalofen**
Muffle system for dental furnace
Système à moufle pour four dentaire

(30) Priorität: 06.12.2002 DE 10257208
(43) Veröffentlichungstag der Anmeldung: 09.06.2004
(73) Patentinhaber: Ivoclar Vivadent AG, 9494 Schaan (LI)
(72) Erfinder: Foser, Hanspeter, 9496 Balzers (LI); Stampfer, Thomas, 6806 Tosters (AT)
(74) Vertreter: Baronetzky, Klaus

(56) Entgegenhaltungen:
- DE-A- 10 037 352
- US-A- 5 406 999
- US-B1- 6 484 791

## Beschreibung

Die Erfindung betrifft ein Verfahren zur Herstellung von Zahnrestaurationsteilen und ein Muffelsystem.

Muffelöfen sind seit langem bekannt, beispielsweise aus der DE-OS 198 44 136. Bei derartigen Muffelöfen wird ein Wachsmodell einer Dentalrestauration vergossen, um einen Negativabdruck zu erhalten. Die Muffel wird dann erwärmt, so dass das aus Wachs bestehende Modell schmilzt und die temperaturbeständige Negativform für die Einbringung einer zu pressenden Keramikmasse bereitsteht.

Dentalrestauration können recht unterschiedliche Formen und Volumina erfordern. Dementsprechend werden häufig gleich mehrere Wachsmodelle in einem Zuge, also in einer Muffel bereitgestellt, vergossen und dementsprechend mehrere Keramik-Restaurationteile durch Pressen erzeugt. Das Pressen geschieht über Keramikmasse, die über einen Einführkanal für die keramische Masse eingebracht wird und von einem Pressstempel unter gleichzeitiger Erwärmung in die Negativform in der Formmasse verbracht wird.

Die Einbringung der Masse kann entweder im vorgepressten Zustand, im pulverförmigen Zustand oder gar im flüssigen Zustand vorgenommen werden, wobei der vorgepresste Formkörper regelmäßig als Rohling bezeichnet wird.

Anstelle von Rohlingen können auch pulverförmige Keramikmassen eingesetzt werden. Die Verwendung von Rohlingen hat andererseits den Vorteil, dass eine genau bemessene Menge an Keramikmaterial eingesetzt wird, so dass der Vortrieb des Stempels für die Ausübung von Druck in dem Pressofen exakt festlegbar und dann mit einer entsprechenden Materialverlagerung korrigiert ist.

Die herzustellenden Zahnersatzteile können signifikant unterschiedliche Mengen an Keramik erfordern - sei es in Form von Keramikpulver, sei als Keramikrohling.

Um diesen Anforderungen gerecht zu werden, lässt sich die Länge des Keramikrohling in gewissen Grenzen anpassen. Der Keramikrohling wird in den Kanal eingeführt, der sich als Negativform des Muffelzylinders ergibt. Um ein Pressergebnis hoher Qualität zu erzielen, muss der Keramikrohling praktisch den gleichen Durchmesser wie der Muffelzylinder aufweisen.

Zwar könnte man die Länge des Muffelzylinders und damit die mögliche Länge des Keramikrohlings erhöhen. Durch eine zu große Länge ergibt sich jedoch eine vergleichsweise große Reibung beim Pressvorgang. Dies ist ungünstig - beispielsweise im Hinblick auf die wenig erforschten Haft-/Gleitreibungszustände während des Pressvorgangs, aufgrund derer Druckschwankungen in den Hohlräumen, in denen die Dentalrestaurationen ausgebildet werden, entstehen.

Um unterschiedlichen Größen von Dentalrestaurationen gerecht zu werden, wird daher üblicherweise eine Mehrzahl von unterschiedlichen Muffelzylindern bereit gehalten, so dass bei größeren Dentalrestaurationen größere Durchmesser der Muffelzylinder eingesetzt werden können.

Andererseits ist die Bereithaltung von mehreren Muffelsystemeh in unterschiedlichen Größen relativ aufwändig, allein, da eine entsprechende Lagerhaltung erforderlich ist.

Um dies zu vermeiden, wird häufig eine mittelgroße Ausgestaltung eines Muffelsystems oder einer Muffelanordnung eingesetzt und es werden dann gleich mehrere Restaurationsteile über entsprechende Trägerarme aus Wachs auf die Anwachsfläche aufgesetzt, so dass die Masse insgesamt etwas vergrößert ist und der Rohling besser ausgenutzt werden kann.

Dennoch entstehen durch die Fehlanpassung erhebliche Materialvertuste, denn ein nur teilgepresster Rohling muss praktisch verworfen werden.

Wenn andererseits bei einer großen erwünschten Materalmenge ein so langer Rohling verwendet wird, dass er aus einem dem Muffelzylinder entsprechenden Kanal herausragt, besteht die Gefahr, dass der Rohling kippt, was zu einem unstabilen Pressvorgang führt.

Demgegenüber liegt der Erfindung die Aufgabe zu Grunde, ein Verfahren zur Herstellung von Zahnrestaurationsteilen gemäß dem Oberbegriff von Anspruch 1 bereitzustellen, sowie ein Muffelsystem gemäß dem Oberbegriff von Anspruch 4 zu schaffen, welche hinsichtlich der Handhabbarkeit und der Kostensituation verbessert ist.

Diese Aufgabe wird erfindungsgemäß durch die Merkmale des Verfahrensanspruchs 1 sowie durch die Merkmale des Anspruchs 4 gelöst.

Vorteilhafte Weiterbildungen ergeben sich aus den abhängiger Ansprüchen.

Mit der erfindungsgemäßen Lösung lässt sich überraschend mit lediglich einem Muffelsystem ein weiter Bereich von Keramikmengen abdecken, die für die DentalrestauraEonsmodelle bestimmt sind. Durch den erfindungsgemäßen Einsatzkörper lässt sich eine recht große Dentalrestauration mit dem gleichen Muffelsystem realisieren.

Hierzu wird ein entsprechend dicker Einsatzkörper, der bevorzugt den Muffelzylinder ringförmig umgibt, eingesetzt. Aufgrund der größeren Dicke kann der dann verwendete Keramikrohling zugleich auch länger sein, ohne dass Stabilitätseinbußen zu befürchten wären.

Insofern kann für durch die erfindungsgemäß ermöglichte Durchmesservergrößerung eine Massenzunahme in der dritten Potenz bereit gestellt werden, so dass auch bei einem vergleichsweise dünnen Einsatzkörper ein recht erheblicher Massengewinn erzielen lässt.

Bevorzugt weist der Muffelzylinder und der ihn umgebende Einsatzkörper einen runden Aufbau auf. Bei Verpressen des Keramikrohlings entsteht so eine zentrale Lastbeaufschlagung für den Keramikrohling, so dass keine Kippkräfte in den Rohling eingeleitet werden.

Erfindungsgemäß kann der Einsatzkörper schmelzen, bevorzugt zusammen mit der Modellmasse. Dementsprechend kann er, wie die Modelle, aus Wachs bestehen und vermag zusammen mit dem geschmolzenen Wachs der Modelle die Hohlräume in der Muffel zu verlassen.

Erfindungsgemäß besonders günstig ist es, wenn der Einsatzkörper eine glatte Außenfläche aufweist. Durch die glatte Außenfläche ist sichergestellt, dass keine zu starke Reibung zwischen der gehärteten Formmasse und dem Keramikrohling entsteht, die ein möglichst störungsfreie Gleitreibung während des Pressvorgangs erlaubt.

Erfindungsgemäß besonders günstig in diesem Zusammenhang ist es, dass die Innenoberfläche der Muffel, also der Außenumfang des Presskanals, regelmäßig noch mit geringen Resten von Wachs behaftet sein kann. Derartige Wachsreste wirken überraschend zugleich als Schmiermittel, ohne jedoch Verunreinigungen der Dentalrestauration zu bilden.

In diesem Zusammenhang besonders günstig ist es, dass die Anwachskanäle, die den Trägerarmen bei der Wachsmodellbefestigung auf der Anwachsfläche entsprechen, zentral, also deutlich innerhalb des hülsenförmigen Einsatzkörpers ausgebildet sind, so dass die äußeren Bereiche des Keramikrohlings nicht oder höchstens am Ende des Pressvorgangs in den Anwachskanal gelangen, jedenfalls nicht bis zur Dentalrestauration vordringen können.

Es versteht sich, dass der Schmiereffekt der Wachsreste lediglich so lange besteht, wie die Temperatur in der Muffel zumindest nicht wesentlich über der Verdampfungstemperatur der Modellmasse liegt, also beim Vorbereiten und Vorheizen des Muffelofens für den eigentlichen Pressvorgang.

In einer weiteren, besonders günstigen Ausgestaltung ist es vorgesehen, dass der Einsatzkörper den Muffelzylinder überragt.

Bei dieser Ausgestaltung lässt sich auch ein noch etwas längerer Rohling einsetzen, ohne dass die Gefahr von Verkantung bestehen würde.

Zweckmäßig wird der Einsatzkörper auf den Muffelzylinder aufgebracht, bevor mit dem Aufwachsen auf der Aufwachsbasis begonnen wird.

Es versteht sich, dass hier unter Einsatzkörper nicht lediglich ein hülsenförmiger Einsatzkörper zu verstehen ist. Beispielsweise können auch mehrere Ringe als Einsatzkörper axial und/oder radial miteinander kombiniert werden. Es versteht sich, dass der radiale Durchmesser des Einsatzkörpers in beliebiger Weise an die Erfordernisse angepasst werden kann.

Der Verwendung des oder der erfindungsgemäßen Einsatzkörper steht nicht entgegen, dass die Aufwachsfläche in an sich bekannter Weise mit einer Sacklochbohrung versehen sein kann, die als Anwachsbasis dienen kann. Wenn der Einsatzkörper sich über diese Fläche hinaus erstreckt, weist er zweckmäßig eine entsprechende Durchtrittsbohrung auf.

Zur Unterscheidung unterschiedlicher Einsatzkörper kann eine beliebige geeignete Kodierung eingesetzt werden. Beispielweise können verschiedene Einsatzkörper unterschiedlich eingefärbt sein.

Wenn die Außenform des Einsatzkörpers von der kreisrunden Form abweicht, ergibt sich auch die Möglichkeit, dass der Keramikrohling reibungsarm aber noch sicher seitlich abgestützt wird. Beispielsweise kann eine sechseckige Form gewählt werden, um die gewünschte Aussteifung zu erreichen.

Weitere Vorteile, Einzelheiten und Merkmale ergeben sich aus der nachfolgenden Beschreibung mehrerer Ausführungsbeispiele anhand der Zeichnungen.

Es zeigen:
- Fig. 1: ein Schnitt durch eine erste Ausführungsform eines erfindungsgemäßen Muffelsystems;
- Fig. 2: die Kombination einer Muffelbasis und eines Muffelzylinders für die Ausführungsform gemäß Fig. 1;
- Fig. 3: eine modifizierte Ausgestaltung der Ausführungsform gemäß Fig. 1 und 2;
- Fig. 4: eine weitere modifizierte Ausgestaltung des erfindungsgemäßen Muffelsystems;
- Fig. 5, 6, 7 und 8: verschiedene Ausführungsformen eines erfindungsgemäßen Einsatzkörpers; und
- Fig. 9: eine Darstellung einer erfindungsgemäß erzeugten Pressform.

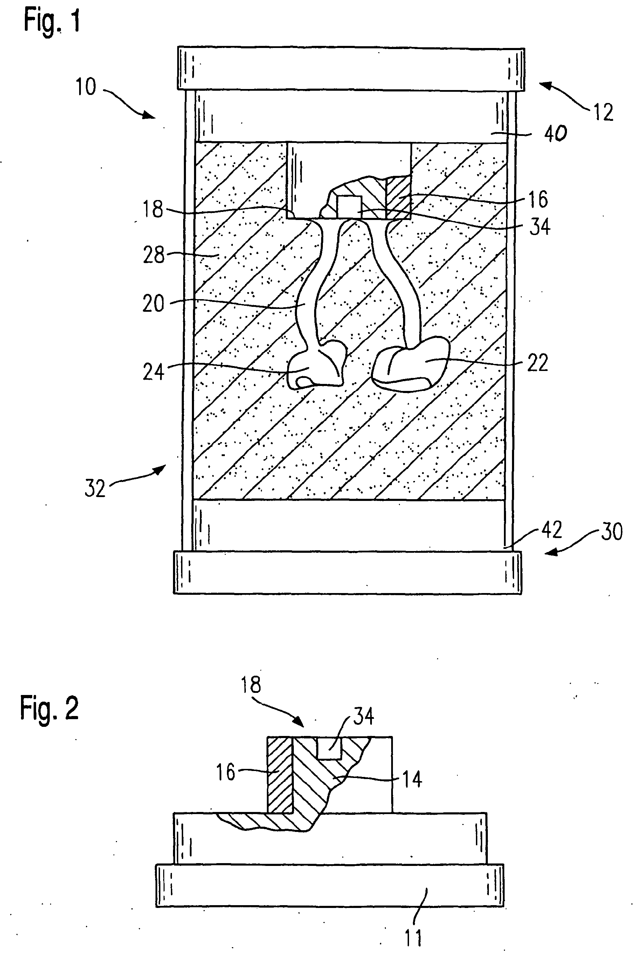

Die in Fig. 1 dargestellte erste Ausführungform eines erfindungsgemäßen Muffelsystems 10 weist eine Muffelbasis 12 auf, von der sich - in der Position gemäß Fig. 1 - ein Muffelzylinder 14 nach unten weg erstreckt.

Erfindungsgemäß ist der Muffelzylinder 14 von einem Einsatzkörper 16 seitlich umgeben, wobei in dem dargestellten Ausführungsbeispiel gemäß Fig. 1, der Einsatzkörper 16 eine Kreisringform aufweist und eine Wandstärke von etwa einem halben Radius des Muffelzylinders hat.

Der Muffelzylinder 14 weist an seinem unteren Bereich an seiner von der Muffelbasis 12 abgewandten Stirnfläche eine Anwachsfläche 18 auf. An der Anwachsfläche 18 ist mindestens ein Trägerarm aus Wachs angebracht, wobei in dem dargestellten Ausführungsbeispiel zwei Trägerarme 20 und 22 ausgebildet sind. An den anderen Enden der Trägerarme 20 und 22 sind etwa zentral in der Muffelanordnung 10 Wachsmodelle 24 und 26 vorgesehen, die in ihrer Form den Dentalrestaurationen entsprechen.

In dem Zustand gemäß Fig. 1 ist das Muffelsystem bereits mit einer Vergussmasse 28 gefüllt, die den Muffelzylinder, die Trägerarme und die Wachsmodelle vollständig und ohne Lufteinschlüsse umgibt.

Zum Befüllen des Muffelsystems 10 weist sie einen Muffeldeckel 30 auf, der - wie auch die Muffelbasis 12 - von einer zylindrischen Muffelform 32, die beispielsweise ein Stück Kunststoffrohr sein kann oder aus Karton bestehen kann, abnehmbar ist. Das Muffelsystem 10 wird hierzu umgedreht, so dass die Muffelbasis 12 und der Muffelzylinder 14 die aus Fig. 2 ersichtliche Position einnehmen. In diesem Zustand wird zunächst bei abgenommener Muffelform 32 der Einsatzkörper 16 auf den Muffelzylinder 14 aufgesteckt oder aufgedreht.

Die Anwachsfläche 18 weist in an sich bekannter Weise eine Sacklochausnehmung 34 auf, die für die Aufnahme eines Anwachspfropfens bestimmt ist, damit die Trägerarme 20 besser auf der Anwachsfläche 14 verankert sind. In dem dargestellten Ausführungsbeispiel erstrecken sich die Wachsmodelle 24 und 26 so weit nach außen, dass ein Aufstecken des Einsatzkörpers 16 bei aufgewachsten Modellen nicht mehr möglich ist. Es versteht sich, dass dies gegebenenfalls auch nachgeholt werden kann, wenn die Modelle einen geringeren aufsummierten Außendurchmesser aufweisen.

Nach dem Abschluss der Wachsarbeiten wird die Muffelform 32, die auch aus Karton bestehen kann, auf einen Absatz 40 der Muffelbasis 12 aufgesteckt. Anschließend hieran wird die Vergussmasse 28 vorsichtig eingebracht. Die Vergussmasse härtet dann als Formmasse aus und ist hitzebeständig gegenüber den Temperaturen, die für das Sintern von Keramiken erforderlich ist, also beispielsweise bis 1100 °C.

Der Muffeldeckel 30, der ebenfalls einen Absatz 42 aufweist, dessen Ausgestaltung dem Absatz 40 entspricht, wird aufgesetzt, so dass das Muffelsystem 10 beliebig handhabbar ist.

Für das Vorbereiten des Pressens wird dann das Muffelsystem 10 bevorzugt in die Position gemäß Fig. 2 gebracht und die Muffelbasis 12 zusammen mit dem Muffelzylinder 14 sowie der Muffeldeckel 20 und auch die Muffelform 32 entfernt. Die Formmasse 28 wird dann etwas vorgewärmt, so dass der Einsatzkörper 16, die Trägerarme 20 und 22 sowie die Wachsmodelle 24 und 26 schmelzen und nach unten austreten. In diesem Zustand stört es nicht, das gewisse Wachsreste als flüssiger Film an den Wandungen der Form bleiben.

Die Formmasse 28 wird dann erneut umgedreht, so dass sie in der Position gemäß Fig. 1 ist. In dieser Position wird dann ein Keramikrohling eingeführt, der einen Außendurchmesser aufweist, der dem Einsatzkörper 16 entspricht. Der Keramikrohling kann ein Höhen/Breitenverhältnis von etwa eins zu eins aufweisen, so dass er ein recht großes Volumen bildet und für die Ausfüllung größere Hohlräume, die den Wachsmodellen 24 und 26 und den Trägerarmen 20 und 22 entsprechen, geeignet ist. Der Keramikrohling wird dann zusammen mit der Formmasse 28 weiter erwärmt, wobei etwaige Wachsreste verdampfen.

Es ist wesentlich, dass mit rückstandsfreiem Wachs gearbeitet ist. Hier ist die Erfindung beispielsweise anhand von Wachs als Material für den Einsatzkörper 16 erläutert. Es versteht sich, dass anstelle dessen auch beliebige andere geeignete Materialen eingesetzt werden können, die sich rückstandsfrei entfernen lassen, also hauptsächlich organische Materialien.

In der Ausführungsform gemäß Fig. 2 ist der Einsatzkörper 16 als zylindrische Hülse ausgebildet, die sich über die Gesamtlänge des Muffelzylinders 14, also bis zur Anwachsfläche 18, erstreckt.

Es versteht sich, dass anstelle dessen auch andere Ausführungsformen möglich sind.

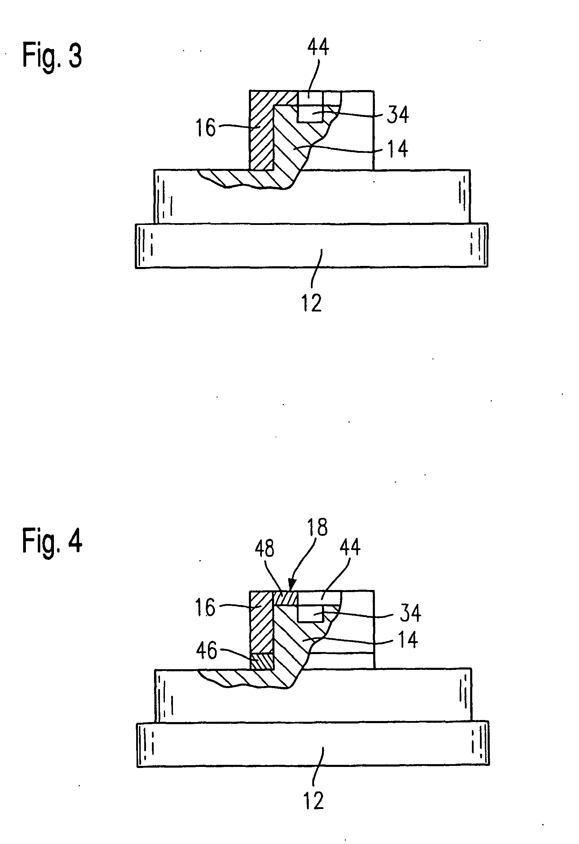

So ist in der Ausführungsform gemäß Fig. 3 ein noch etwas vergrößerter Einsatzkörper 16 vorgesehen, der sich über den Muffelzylinder 14 hinaus erstreckt und den Muffelzylinder 14 an seiner Oberseite (oder der Unterseite in der Position gemäß Fig. 1) abdeckt. Die Wandstärke des Einsatzkörpers 16 an seiner Stirnfläche und an seiner zylindrischen Wand ist in dieser Ausführungsform gleich ausgebildet.

Um den Zugang zur Sacklochausnehmung 34 zu ermöglichen, ist bei dieser Lösung eine Durchtrittsausnehumung 44 vorgesehen, die mit der Sacklochausnehmung 34 fluchtet und in der die Trägerarme 20 und 22 befestigbar sind.

Eine modifizierte Ausgestaltung mit einem mehrteiligen Einsatzkörper 16 ist aus Fig. 4 ersichtlich. Bei dieser Lösung ist ein Distanzkörper 46, im Beispielsfall ein Distanzring vorgesehen, der auf der Muffelbasis 12 aufliegt und auf den Muffelzylinder 14 lösbar aufgesteckt wird. Der Distanzkörper 46 kann dann zusammen mit dem Muffelzylinder 14 und der Muffelbasis 12 entnommen werden, so dass er nicht verloren ist, wenn die Vorerwärmung vorgenommen wird.

Bei dieser Lösung ist auch anstelle des topfförmigen Einsatzkörpers 16 gemäß Fig. 3 ein ringförmiger Einsatzkörper 16 vorgesehen. Der Einsatzkörper 16 überragt die Anwachsfläche 18, wobei der Ringraum zwischen Durchtrittsausnehmung 44 und Einsatzkörper 16 durch eine Einsatzscheibe 48 ausgefüllt ist, die je nach Anforderungsprofil als verlorene oder nicht verlorene Schreibe ausgebildet sein kann.

Es versteht sich, dass anstelle der hier dargestellen ringförmigen Einsatzkörper auch beliebige andere Formen für die Einsatzkörper verwendet werden können.

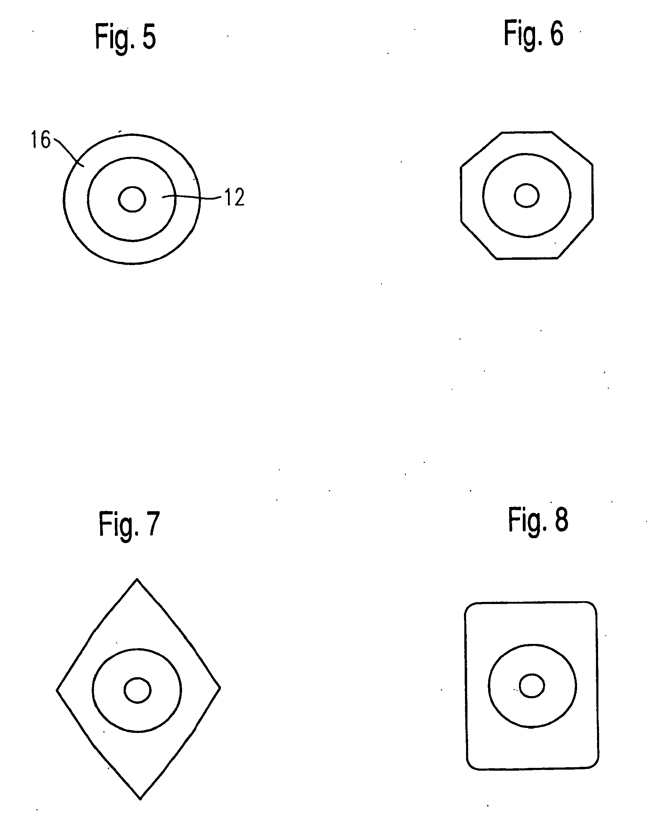

Die Fig. 5 bis 8 zeigen derartige Formen mit gleichen Innengestaltungen, jedoch unterschiedlichen Außenformen.

Fig. 5 zeigt eine kreisförmige Außenform, Fig. 6 eine achteckige Außenform, Fig. 7 eine Form einer ballig verrundeten Raute und Fig. 8 eine Rechtecksform mit abgerundeten Ecken. Es können beliebige Formen der Rohling verwendet werden, wobei es günstig sein kann, die Rohling-Außenform von der Einsatzkörper-Außenform abweichen zu lassen, um so eine reduzierte Kontaktfläche zu ermöglichen.

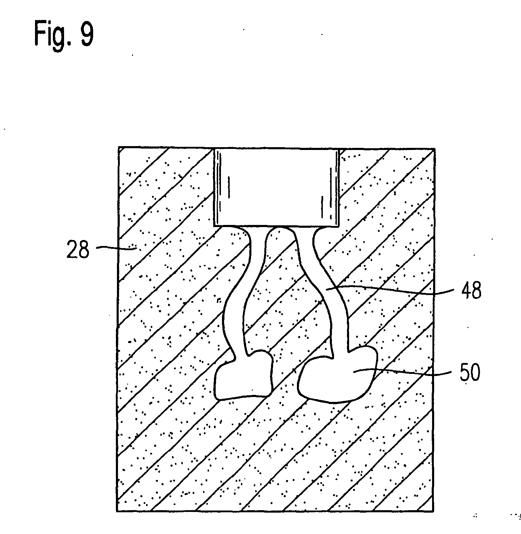

Aus Fig. 9 ist schließlich die Ausgestaltung der Formmasse 28, die als Pressform dient, ersichtlich, sobald Muffelbasis und Muffelzylinder entfernt und die aus Wachs bestehenden Massen geschmolzen sind. Anstelle der Trägerarme erstrecken sich dann Kanäle 48, und die Stellen, an denen die Wachsmodelle 24 und 26 ausgebildet waren, sind dann als Hohlräume 50 vorgesehen. Der Bereich des Einsatzkörpers 16 liegt offen frei, so dass dort der Keramikrohling eingesetzt werden kann.

Es ist möglich, sowohl den Einsatzkörpern 16 als auch den Distanzringen 46 und Einsatzscheiben 48 entsprechende Kodierungen zu geben, beispielsweise über die Farbgebung und/oder über entsprechende Beschriftungen. Hierdurch können die Größen farblich gekennzeichnet werden, so dass unterschiedliche Größen leichter erkennbar sind.

## Patentansprüche

1. Verfahren zur Herstellung von Zahnrestaurationsteilen mit Hilfe eines Muffelsystems, einer Einbettmasse, eines Pressrohlings sowie einer Pressvorrichtung, mit den folgenden Schritten: vor dem Befüllen des Muffelsystems mit der Einbettmasse (28) wird ein Muffelzylinder (14) des Muffelsystems mit einem den Muffelzylinder (14) wenigstens teilweise umgebenden Einsatzkörper (16) in Verbindung gebracht,
nach dem Aushärten der Einbettmasse (28) wird das Muffelsystern sowie der Einsatzkörper (16) von der eine Muffel bildenden, ausgehärteten Einbettmasse entfernt
und anschließend wird der im Wesentlichen auf die Ausenkontur des Einsatzkörpers (16) abgestimmte Pressrohling mit Hilfe der Pressvorrichtung in die Muffel gepresst.

2. Verfahren nach Anspruch 1,
bei dem ein Kolben der Pressvorrichtung eine im Wesentlichen auf die Außenkontur des Einsatzkörpers (16) abgestimmte Außenkontur aufweist.

3. Verfahren nach Anspruch 1 oder 2, bei dem der Pressrohling eine von einer kreisrunden Form abweichende Außenkontur aufweist.

4. Muffelsystem mit einer, einen insbesondere kreisrunden Muffelzylinder (14) aufweisenden Muffelbasis (12) auf dem Modelle aus einer schmelzbaren Masse, insbesondere Wachsmodelle, - gegebenenfalls über Trägerarme - aufbringbar sind,
**dadurch gekennzeichnet, dass** der Muffelzylinder (14) von einem schmelzbaren Einsatzkörper (16) mindestens teilweise, insbesondere vollständig, umgeben ist.

5. Muffelsystem nach Anspruch 4,
**dadurch gekennzeichnet, dass** der Einsatzkörper (16) für die Aufnahme einer Keramikmasse, insbesondere in Form eines Pressrohlings, entfernbar, insbesondere schmelzbar ist.

6. Muffelsystem nach Anspruch 4 oder 5,
**dadurch gekennzeichnet, dass** der Einsatzkörper (16) wenigstens teilweise in Form einer Hülse ausgebildet ist.

7. Muffelsystem nach einem der Ansprüche 4 bis 6,
**dadurch gekennzeichnet, dass** der Einsatzkörper (16) auf den Muffelzylinder (14) aufsteckbar ist.

8. Muffelsystem nach einem der Ansprüche 4 bis 7,
**dadurch gekennzeichnet, dass** der Einsatzkörper (16) eine Länge aufweist, die im Wesentlichen der Länge des Muffelzylinders (14) entspricht.

9. Muffelsystem nach einem der Ansprüche 4 bis 8,
**dadurch gekennzeichnet, dass** sich zwischen dem Einsatzkörper (16) und der Muffelbasis (12) ein ringförmiger Distanzkörper (46) erstreckt, der zusammen mit der Muffelbasls (12) und dem Muffelzylinder (14) der gehärteten Formmasse entnehmbar ist.

10. Muffelsystem nach einem der Ansprüche 4 bis 7,
**dadurch gekennzeichnet, dass** sich zwischen dem Einsatzkörper (16) und der Muffelbasis (12) ein ringförmiger Distanzkörper (46) erstreckt, der zusammen mit dem Einsatzkörper (16) schmelzbar ist.

11. Muffelsystem nach einem der Ansprüche 9 bis 10,
**dadurch gekennzeichnet, dass** der Distanzkörper (46) eine im Wesentlichen dem Einsatzkörper (16) entsprechende Außenkontur aufweist.

12. Muffelsystem nach einem der Ansprüche 9 bis 11,
**dadurch gekennzeichnet, dass** an der Stirnseite des Muffelzylinders (14) eine der Innenkontur des Einsatzkörpers (16) entsprechende Einsatzscheibe (48) angeordnet ist, deren Wandstärke der Wandstärke des Distanzkörpers (46) entspricht.

13. Muffelsystem nach einem der Ansprüche 9 bis 12,
**dadurch gekennzeichnet, dass** unterschiedliche Distanzkörper (46) oder Distanzringe eine unterschiedliche Kodierung, insbesondere unterschiedliche Farbgebung, aufweisen, wobei jede Kodierung einer vorgegebenen Länge und/oder eines vorgegebenen Außendurchmessers des Distanzringes oder des Distanzkörpers (46) entspricht.

14. Muffelsystem nach einem der Ansprüche 4 bis 7,
**dadurch gekennzeichnet, dass** der Einsatzkörper (16) eine größere axiale Länge besitzt und an einem Ende einen die Stirnseite des Muffelzylinders (14) wenigstens teilweise abdeckenden Boden aufweist.

15. Muffelsystem nach einem der Ansprüche 4 bis 14,
**dadurch gekennzeichnet, dass** die vom Boden abgewandte Seite des Muffeizylinders (14) eine Anwachsfläche (18) bildet, auf der die Wachsmodelle (24, 26) über Trägerarme (20, 22) befestigt sind.

16. Muffelsystem nach einem der Ansprüche 4 bis 15,
**dadurch gekennzeichnet, dass** die freie Stirnseite des Muffelzylinders (14), eine Sacklochausnehmung (34) aufweist und/oder das Einsatzteil (48) und/oder der Boden des Einsatzkörpers (16) eine Durchtrittsausnehmung (44) aufweisen.

17. Muffelsystem nach einem der Ansprüche 4 bis 16,
**dadurch gekennzeichnet, dass** Einsatzkörper (16) unterschiedlicher Wandstärken eine je unterschiedliche Kodierung, insbesondere eine unterschiedliche Farbe aufweisen, die je mit dem gleichen Muffelzylinder (14) verwendbar sind.

18. Muffelsystem nach einem der Ansprüche 4 bis 17,
**dadurch gekennzeichnet, dass** der Einsatzkörper (16) eine kreisrunde Außenkontur aufweist.

19. Muffelsystem nach einem der Ansprüche 4 bis 17,
**dadurch gekennzeichnet, dass** der Einsatzkörper (16) eine von einer kreisrunden Form abweichende Außenkontur aufweist.

20. Muffelsystem nach einem der Ansprüche 4 bis 19,
**dadurch gekennzeichnet, dass** der Einsatzkörper (16) als vorgefertigtes Wachsteil ausgebildet ist, dessen Schmelzpunkt im Wesentlichen dem Schmelzpunkt der Wachsmodelle (24, 26) entspricht.

## Claims

1. A method for producing dental restoration components with the aid of a muffle system, an embedding compound, a press blank and a pressing device, said method comprising the following steps:
prior to filling the muffle system with the embedding compound, connecting a muffle cylinder (14) of the muffle system to an insert body (16) that at least partially surrounds the muffle cylinder (14);
after the hardening of the embedding compound (28), removing the muffle system and the insert body (16) from the hardened embedding compound, forming a muffle; and
with the aid of a pressing device, pressing a press blank having a shape that substantially corresponds to the outer contour of the insert body (16) into the muffle.

2. A method as claimed in claim 1, in which a piston of the pressing device has an outer contour that substantially corresponds to the outer contour of the insert body (16).

3. A method as claimed in claims 1 or 2, in which the press blank has an outer contour that deviates from a circular shape.

4. A muffle system comprising a muffle base (12) with a preferably circular muffle cylinder (14), onto which models formed of a meltable mass, in particular wax models can be applied - if applicable, with the aid of support arms,
**characterized in that** the muffle cylinder (14) is at least partially, in particular completely surrounded by a meltable insert body (16).

5. A muffle system as claimed in claim 4,
**characterized in that** the insert body (16) is removable, in particular meltable, in order to receive a ceramic mass in particular in the form of a press blank..

6. A muffle system as claimed in claims 4 or 5,
**characterized in that** the insert body (16) at least partially has the shape of a sleeve.

7. A muffle system as claimed in one of the claims 4 to 6,
**characterized in that** the insert body (16) can be slipped over the muffle cylinder (14).

8. A muffle system as claimed in one of the claims 4 to 7,
**characterized in that** the insert body (16) has a length substantially corresponding to the length of the muffle cylinder (14).

9. A muffle system as claimed in one of the claims 4 to 8,
**characterized in that** a ring-shaped spacer body (46) extends between the insert body (16) and the muffle base (12), said ring-shaped spacer body (46) together with said muffle base (12) and said muffle cylinder (14) being removable from the hardened embedding compound.

10. A muffle system as claimed in one of the claims 4 to 7,
**characterized in that** a ring-shaped spacer body (46) extends between the insert body (16) and the muffle base (12), said ring-shaped spacer body (46) together with the insert body (16) being meltable.

11. A muffle system as claimed in one of the claims 9 to 10,
**characterized in that** the spacer body (46) has an outer contour substantially corresponding to the outer contour of the insert body (16).

12. A muffle system as claimed in one of the claims 9 to 11,
**characterized in that** an insert disk (48) corresponding to the inner contour of the insert body (16) is arranged on the front end of the muffle cylinder and has a wall thickness corresponding to the wall thickness of the spacer body (46).

13. A muffle system as claimed in one of the claims 9 to 12,
**characterized in that** various spacer bodies (46) or spacer rings comprise a different coding, in particular a different colouring, each coding corresponding to a given length and/or a given outer diameter of the spacer ring or the spacer body (46).

14. A muffle system as claimed in one of the claims 4 to 7,
**characterized in that** the insert body (16) has a larger axial length and at one end comprises a bottom that at least partially covers the front end of the muffle cylinder (14).

15. A muffle system as claimed in one of the claims 4 to 14,
**characterized in that** the side of the muffle cylinder (14) facing away from the bottom, forms a growth surface (18) on which the wax models (24, 26) are attached with the aid of support arms (20, 22).

16. A muffle system as claimed in one of the claims 4 to 15,
**characterized in that** the free front end of the muffle cylinder (14) comprises a blind hole-shaped recess (34) and/or the insert disk (48) and/or the bottom of the insert body (16) comprise a passage recess (44).

17. A muffle system as claimed in one of the claims 4 to 16,
wherein insert bodies (16) with different wall thicknesses each comprise a different coding, respectively, in particular a different colour, suitable for use with the same respective muffle cylinder (14).

18. A muffle system as claimed in one of the claims 4 to 17,
**characterized in that** the insert body (16) has a circular outer contour.

19. A muffle system as claimed in one of the claims 4 to 17,
**characterized in that** the insert body (16) has an outer contour differing from a circular shape.

20. A muffle system as claimed in one of the claims 4 to 19,
**characterized in that** the insert body (16) is configured as prefabricated wax piece whose melting point substantially corresponds to the melting point of the the wax models 24, 26.

## Revendications

1. Procédure de fabrication de pièces pour la restauration dentaire à l'aide d'un système de moufle, d'un revêtement, d'un lingotin de pressée ainsi que d'un dispositif de pressée, avec les étapes suivantes : avant de remplir le système de moufle avec le revêtement (28) un cylindre de moufle (14) du système de moufle est mise en contact avec un corps d'insertion (16) qui entoure au moins partiellement le cylindre de moufle (14) ; après le durcissement du revêtement (28) le système de moufle ainsi que le corps d'insertion (16) sont éloignés du revêtement durci formant un moufle, et ensuite le lingotin de pressée, adapté essentiellement au contour externe du corps d'insertion (16) à l'aide du dispositif de pressée, est injecté dans la moufle.

2. Procédure de fabrication de pièces de restauration dentaire à l'aide d'une procédure selon la revendication 1, où un piston du dispositif de pressée présente un contour externe essentiellement adapté au contour externe du corps d'insertion (16).

3. Procédure selon la revendication 1 ou 2, où le lingotin de pressée présente un contour externe déviant d'une forme circulaire.

4. Système de moufle avec une base de moufle (12), présentant un cylindre de moufle (14) de préférence circulaire, sur lequel des modèles d'une masse fusible, de préférence des modèles de cire sont éventuellement applicables par des bras porteurs, **caractérisé en ce que** le cylindre de moufle (14) est entouré au moins en partie, de préférence complètement d'un corps d'insertion fusible (16).

5. Système de moufle selon la revendication 4, **caractérisé en ce que** le corps d'insertion (16) pour admettre une masse de céramique, de préférence sous la forme de lingotin de pressée, peut être enlevé, de préférence est fusible.

6. Système de moufle selon la revendication 4 ou 5, **caractérisé en ce que** le corps d'insertion (16) est au moins en partie configuré sous la forme de douille.

7. Système de moufle selon l'une des revendications 4 à 6, **caractérisé en ce que** le corps d'insertion (16) est relevable sur le cylindre de moufle (14).

8. Système de moufle selon l'une des revendications 4 à 7, **caractérisé en ce que** le corps d'insertion (16) présente une longueur qui correspond essentiellement à la longueur du cylindre de moufle (14).

9. Système de moufle selon l'une des revendications 4 à 8, **caractérisé en ce qu'**entre le corps d'insertion (16) et la base de moufle (12) un corps d'écartement en forme d'anneau (46) s'étend, qui avec la base de moufle (12) et le cylindre de moufle (14) de la matière moulable durcie est amovible.

10. Système de moufle selon l'une des revendications 4 à 7, **caractérisé en ce qu'**entre le corps d'insertion (16) et la base de moufle (12) un corps d'écartement en forme d'anneau (46) s'étend qui est fusible avec le corps d'insertion (16).

11. Système de moufle selon l'une des revendications 3 à 10, **caractérisé en ce que** le corps d'écartement (46) présente un contour externe correspondant essentiellement aux corps d'insertion (16).

12. Système de moufle selon l'une des revendications 9 à 11, **caractérisé en ce qu'**un disque d'application (48) correspondant au contour interne du corps d'insertion (16) est disposé sur la face de devant du cylindre de moufle (14), dont l'épaisseur de paroi correspond à l'épaisseur de paroi du corps d'écartement (46).

13. Système de moufle selon l'une des revendications 9 à 12, **caractérisé en ce que** des corps d'écartement différents (46) ou des anneaux d'écartement présentent un codage différent, de préférence des couleurs différentes, où chaque codage correspond à une longueur prédéfinie et/ou à un diamètre extérieur prédéfini de l'anneau d'écartement ou du corps d'écartement (46).

14. Système de moufle selon l'une des revendications 4 à 7, **caractérisé en ce que** le corps d'insertion (16) possède une plus grande longueur axiale et à une extrémité présente un fond couvrant au moins partiellement la face de devant du cylindre de moufle (14).

15. Système de moufle selon l'une des revendications 4 à 14, **caractérisé en ce que** le côté du cylindre de moufle (14) détourné du fond forme une surface d'attache (18), sur laquelle les modèles de cire (24,26) sont attachés par des bras porteurs (20,22).

16. Système de moufle selon l'une des revendications 4 à 15, **caractérisé en ce que** la face de devant libre du cylindre de moufle (14) présente un creux à fond plein (34) et/ou que la pièce d'insertion (48) et/ou le fond du corps d'insertion (16) présentent un creux de passage (44).

17. Système de moufle selon l'une des revendications 4 à 16, **caractérisé en ce que** des corps d'insertion (16) d'épaisseur de paroi différente présentent chacun un codage différent, de préférence une couleur différente qui est utilisable chacun avec le même cylindre de moufle (14).

18. Système de moufle selon l'une des revendications 4 à 17, **caractérisé en ce que** le corps d'insertion (16) présente un contour externe circulaire.

19. Système de moufle selon l'une des revendications 4 à 17, **caractérisé en ce que** le corps d'insertion (16) présente un contour externe déviant d'une forme circulaire.

20. Système de moufle selon l'une des revendications 4 à 19, **caractérisé en ce que** le corps d'insertion (16) est formé comme pièce en cire préfabriquée dont le point de fusion correspond essentiellement au point de fusion des modèles de cire (24, 26).
